# EUROPEAN PATENT APPLICATION

(11) **EP 1 583 266 A2**
(43) Date of publication of application: **05.10.2005**
(21) Application number: 05388030.8
(22) Date of filing: 31.03.2005
(51) Int. Cl.: H04J 3/06

(54) **Synchronisation for TDM services in packet networks**

(30) Priority: 31.03.2004 DK 200400518
(71) Applicant: TELLABS DENMARK A/S, 2750 Ballerup (DK)
(72) Inventor: Ellegard, Lars, 3060 Espergaerde (DK)
(74) Representative: Boesen, Johnny Peder

(57) **Abstract**

In a method of transmitting TDM services through a packet network to TDM user equipment, the packet network comprises a number of packet switching network elements, wherein each element transmits data at a certain data rate. The method comprises the steps of supplying a TDM synchronization signal to at least one network element; synchronizing the transmission data rate of the at least one element to the TDM synchronization signal; synchronizing the data rate of other network elements to the data rate of received data originating from the at least one network element; and generating at the TDM user equipment a TDM clock signal from the data rate of data received from one of the synchronized elements. In this way the quality of the recovered TDM clock signal complies with the relevant synchronisation standards, and very expensive equipment, such as GPS receivers or a separate clock distribution network, is not required.

## Description

The invention relates to a method of transmitting TDM services through a packet network to TDM user equipment, said packet network comprising a number of packet switching network elements, wherein each packet switching network element transmits data to the network on a bearer link using a certain data rate. The invention further relates to a packet switching network element for receiving data packets from and transmitting data packets to a number of physical links of a packet network.

When voice and other services are transmitted through transmission networks, there are very tight bounds on timing jitter (clock frequency jitter) and transmission delay caused by the network. These requirements are imposed by the electronic equipment (e.g. a telephone exchange) receiving the signals for processing.

Such signals have traditionally been carried over TDM (Time Division Multiplex) networks, which offer such characteristics. The receiving equipment receives a continuous bit stream (the TDM service) and a synchronisation signal (the synchronisation service). The service provider delivers the synchronisation service as part of the TDM signal or through a dedicated synchronisation signal to the receiving part.

Now, the current trend in the telecom industry is to implement transmission networks using packet technology, for instance Ethernet. To support legacy TDM services, circuit emulation is applied. Circuit emulation is a technique where the continuous TDM data flow is chopped up into packets when entered into the packet transmission network and transmitted as packets through the network. At the destination network point the packets are reassembled into a continuous TDM data stream, which is delivered to the receiving part.

However, one of the concepts of a packet transmission network is that the packet transmission is asynchronous. None of transmitting and receiving network elements are synchronized, nor is the transmission on the physical bearer links in the network synchronized in any way. Therefore, the packet transmission imposes an unpredictable and varying delay on the packets, which complicates the re-assembly and results in a timing jitter of the final reassembled TDM signal's data rate. Also, some data buffering at the receiving side is required to average out the varying transmission delay of the packets. Such data buffers cause further delay.

In order to obtain a TDM signal meeting the receiver's strict bounds on timing jitter some method that reduces the timing jitter must be applied.

One method of clock recovery is to use a known common clock at either end of the packet network. This clock signal can be distributed in a separate network, but obviously, this requires the installation of an additional network for this sole purpose. Another way to obtain the necessary timing signal is to derive a timing signal at the receiver side (and the transmitter side) from a GPS-signal using a GPS satellite receiver. However, this is a very expensive solution and it also requires maintenance of extra electronic equipment.

Another known solution is to derive a timing signal from the arrival rate of the ingress packet flow over a period using for instance a filter or phase locked loop averaging out the timing jitter. Such a solution is known from EP 1 394 974, in which a packet buffer and a counter counting the number of packets in the packet buffer is used in combination with a filter to control the frequency of the recovered TDM clock signal. The resulting TDM signal will, however, have a lesser quality than the synchronisation supplied by a standard TDM synchronisation network due to packet loss and variations in delay through the packet network. In certain scenarios the quality will not comply with relevant national and international synchronisation standards.

In GB 2 392 353 TDM timing information is distributed across a packet network in a TDM backplane of a telecommunications gateway. The timing signals are transmitted as packets from a master clock and broadcasted to a plurality of slave clocks at predictable intervals. In the slaves the intervals between successively received packets are determined, and a clock recovery algorithm is applied to the determined intervals between packets. As above, a buffer and a packet counter are needed, and it will not be possible to achieve a quality level complying with relevant national and international synchronisation standards.

Therefore, it is an object of the invention to provide a method of recovering a TDM clock signal after transmission of TDM services through a packet network, wherein the quality of the recovered TDM clock signal complies with the relevant national and international synchronisation standards, and which does not require very expensive equipment, such as GPS receivers or a separate clock distribution network.

According to the invention the object is achieved in that the method comprises the steps of supplying a TDM synchronization signal to at least one of said packet switching network elements; synchronizing the transmission data rate of said at least one packet switching network element to said TDM synchronization signal; synchronizing the data rate of other packet switching network elements to the data rate of received data originating from said at least one packet switching network element; and generating at said TDM user equipment a TDM clock signal from the data rate of data received from one of said synchronized packet switching network elements.

Thus the invention uses the physical bearer links of the packet network to supply the synchronisation to the end-user equipment. The timing (data rate) of the bearer links carrying the packets in the network is strictly controlled so that high quality timing information can propagate through the network inherent in the timing of the physical bearer links. In one network element the rate of the bearer link out of this element is synchronized to the TDM synchronization signal, and in the other network elements the outgoing bearer link is synchronized to an incoming bearer link originating from the network element that is synchronized to the TDM synchronization signal.

When the packet network is connected to a synchronous network, such as an SDH network, the method may further comprise the step of obtaining the TDM synchronization signal from a timing signal of the synchronous network.

In an expedient embodiment, the packet network is an Ethernet.

The method may further comprise the step of transmitting from each of the synchronized packet switching network elements a quality message indicative of a quality level of its data rate. In this case, the method may further comprise the step of synchronizing the data rate of a packet switching network element receiving data and quality messages from more than one other packet switching network element to the received data rate having the highest quality level.

As mentioned, the invention further relates to a packet switching network element for receiving data packets from and transmitting data packets to a number of physical links of a packet network, wherein the packet switching network element is arranged to transmit data packets to the network on a bearer link using a certain data rate, said bearer link data rate being controlled by a clock signal generated in the network element. When the packet switching network element further comprises means for synchronizing said clock signal to the bearer link data rate of data packets received from a selected one of the physical links connected to the network element, the transmitted bearer link data rate may be synchronized to an incoming bearer link data rate, and thus the physical bearer links of the packet network may be used to supply synchronization through the network to an end-user equipment.

When the element further comprises means for synchronizing said clock signal to a TDM synchronization signal supplied to the element, the element may serve as the point where a TDM synchronization to be supplied through the network can be introduced. If the element is connected to a synchronous network, the element may be arranged to obtain said TDM synchronization signal from a timing signal of the synchronous network. The synchronous network may be an SDH network.

In an expedient embodiment, the packet network may be an Ethernet.

The packet switching network element may further be arranged to transmit a quality message indicative of a quality level of its bearer link data rate. In this case, the element may further be arranged to synchronize said clock signal, when data packets and quality messages are received from more than one physical link, to the bearer link data rate of the physical link having the highest quality level.

The invention will now be described more fully below with reference to the drawings, in which
figure 1 shows a traditional TDM services network;
figure 2 shows a packet network with circuit emulation;
figure 3 shows a synchronisation service being part of the packet network;
figure 4 shows a synchronisation distribution network;
figure 5 shows a traditional packet switching equipment;
figure 6 shows a synchronisation capable packet switching equipment;
figure 7 shows a synchronisation distribution architecture in an Ethernet network;
figure 8 shows synchronisation of outgoing Ethernet signals in an interface between an SDH network and an Ethernet; and
figure 9 shows synchronisation of outgoing Ethernet signals in an Ethernet network element.

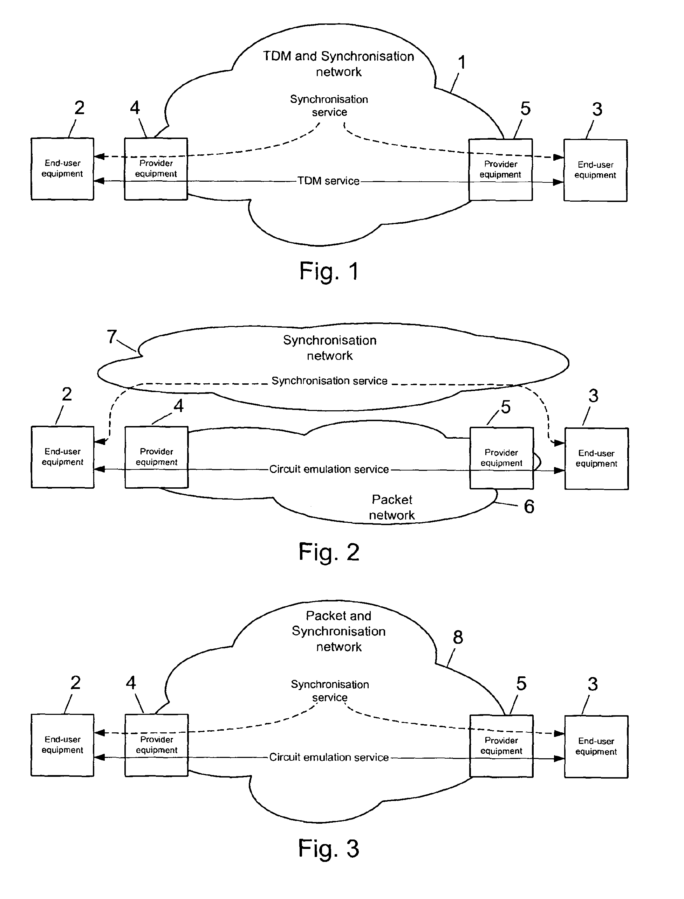

Traditionally, as shown in figure 1, TDM (Time Division Multiplex) services have been carried over TDM networks 1 in which the receiving equipment receives a continuous bit stream (the TDM service) and a synchronisation signal (the synchronisation service). In the figure, the TDM service is transmitted between end-user equipments 2, 3 connected to network elements (provider equipments) 4, 5, respectively. Typically, the service provider delivers the synchronisation service as part of the TDM signal to the receiving part.

When TDM services are carried over a packet network 6, as shown in figure 2, the synchronisation service according to prior art could be provided through a separate synchronisation network 7, but as mentioned, this is an expensive and complicated solution.

According to the invention, however, the synchronisation service may be part of the packet network 8, as shown in figure 3.

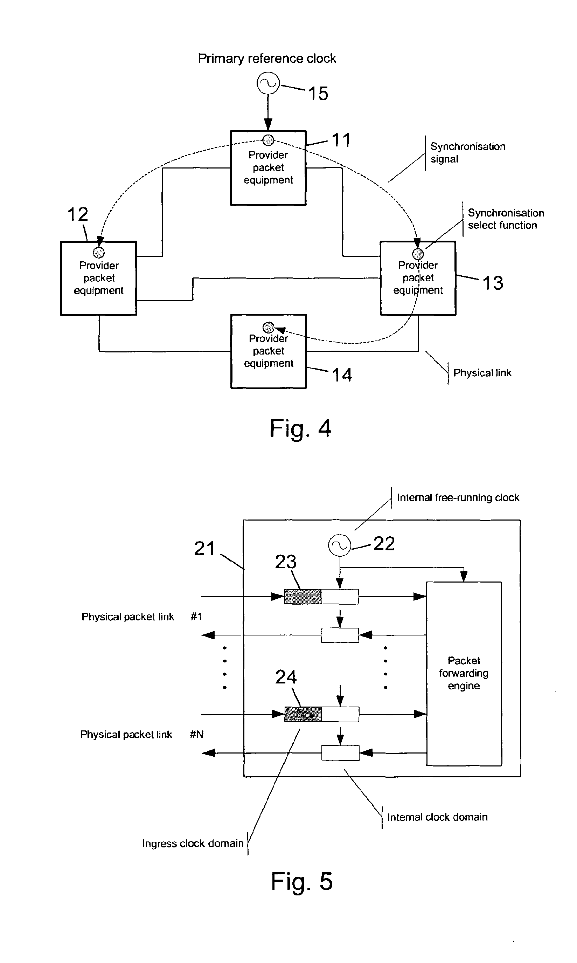

Figure 4 illustrates in more detail the synchronisation network, consisting of a number of packet switching network elements 11, 12, 13, 14 capable of synchronisation and interconnected using physical links. The synchronisation signal and the timing quality information are carried on the links independent of the packets transmitted.

One of the network elements 11 is synchronized internally to a TDM clock signal 15, and since the timing of the physical bearer links going out of this element is controlled by its internal clock, the bearer link is consequently also synchronized to the TDM clock signal. The other network elements 12, 13, 14 extract timing/synchronization information from the physical bearer signal on one input port and use this high quality timing information to control their internal clock signal. The internal clock controls the timing of the physical bearer links going out of the network element. If a network element has more than one incoming physical link, it selects one of them as the timing source based on the quality and priority of each ingress synchronisation signal.

Figure 5 shows how traditional packet switching equipment, i.e. a network element 21, operates. Each ingress physical link delivers packets in its own clock domain. Received packets are adapted to the internal free-running clock domain, i.e. the internal clock signal 22, in a buffer arrangement 23, 24. Packets are transmitted from the equipment using the internal clock 22, corresponding to the internal clock domain. However, the equipment may transmit with different data rates on different links. Thus there is no synchronization between incoming and outgoing links, and the individual network elements are not synchronized to each other.

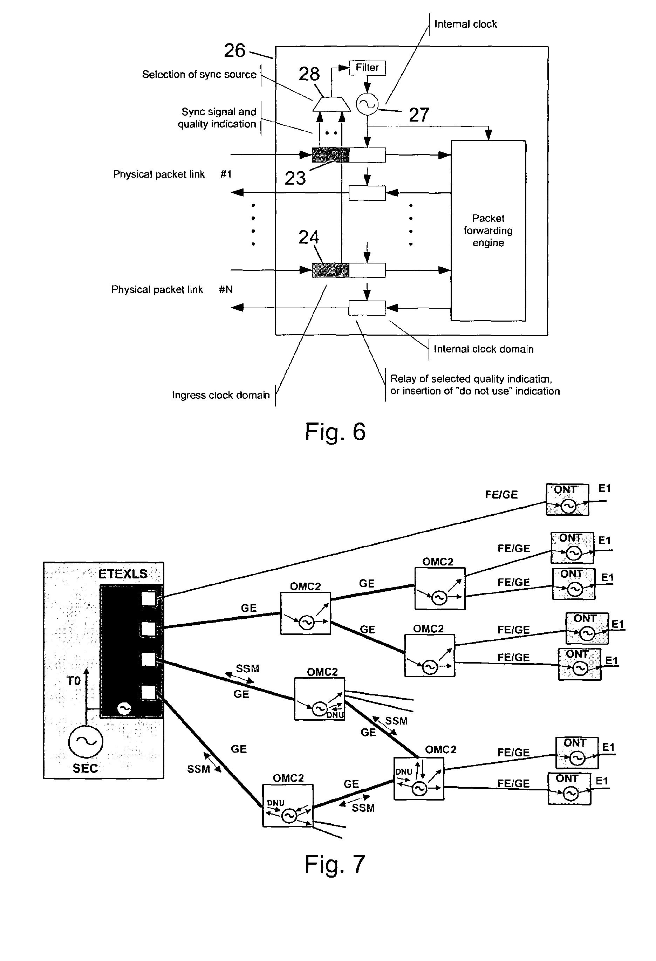

Figure 6 illustrates an example of the additions that could be provided in packet switching equipment, i.e. the network element 26, to be synchronisation capable according to the invention. The internal clock 27 could be locked to one of the ingress synchronisation signals from the physical links, or to a dedicated synchronisation input. The decision of which synchronisation signal to select in the selection circuit 28 is based on for instance the signal quality indication extracted from the incoming bearers and a configured priority. The selected signal is filtered to reduce or eliminate jitter and wander. Thus outgoing links are now synchronized to one of the incoming links, and the individual network elements may be synchronized to each other. One network element, e.g. the one where the TDM service is introduced into the network, is instead synchronized to the TDM clock signal, as mentioned above.

Below, an example will be described in more detail, in which an Ethernet network is connected to an SDH network.

When delivering TDM services over an Ethernet infrastructure, the service needs retiming before hand-off to the end-user. Figure 7 illustrates this using as head-end a network element ETEXSL, which feeds the customer located equipment directly (point-to-point) in the upper part of the figure, via packet switching network elements OMC2 placed in a star structure as shown in the middle part of the figure, and via OMC2 placed in a ring structure as shown in the lower part of the figure.

In the point-to-point and star structures no special signalling is required. The equipment is placed in a strict hierarchical structure - hence no fallback input is available. In the ring structure each OMC2 has two possible synchronisation sources - from the west and east directions, respectively. To choose between the better of the two sync sources the OMC2 may distribute synchronisation source messages (SSM).

The behaviour of the elements (ETEXLS and OMC2) must be equal to the behaviour of an SDH network element to build on the community knowledge base. The functions may be simplified though. To furthermore reduce implementation effort a commercial SEC (SDH Equipment Clock)-block, like Zar-link ZL30407 may be used.

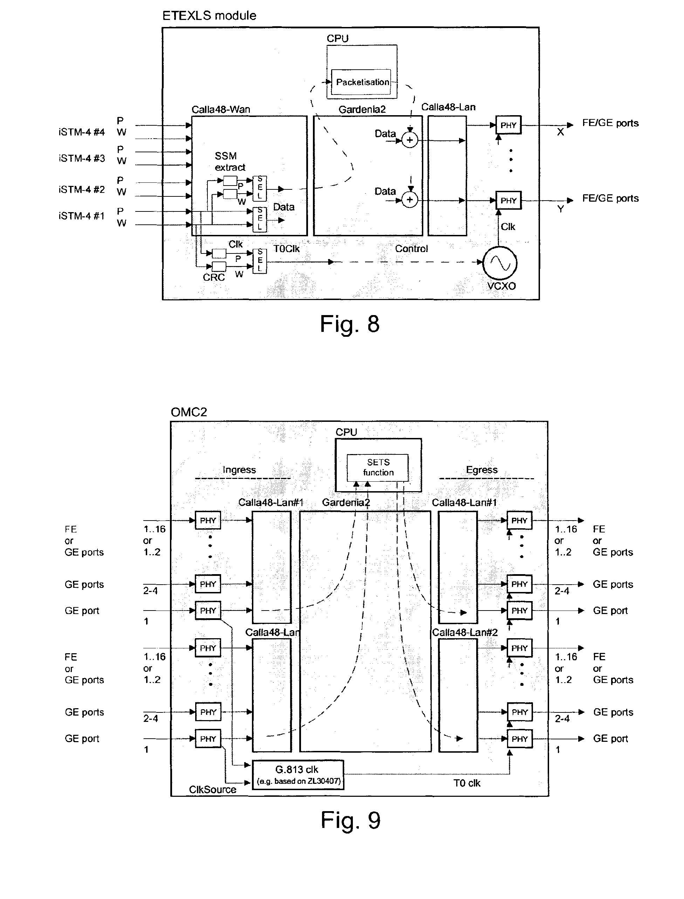

Synchronisation of the network element ETEXLS, in which the SDH service is introduced into the Ethernet, is illustrated in figure 8. The synchronisation is derived from the working or protection iSTM-4 #1, and used to clock all PHYs (physical links). The SSM contained in the S1 byte of the internal OH of the iSTM-4 is read, packetised and distributed out over the Ethernet interfaces.

The ETEXLS must be able to derive the timing signal from either the ingress working or protection port on iSTM-4 #1. The port selected shall be the one otherwise selected for processing of the payload traffic signal. The selected timing signal shall be used to control (lock) the oscillator used for timing the (egress signals on the) FE and GE PHYs. The SSM read from the S1 byte of the iSTM-4 #1 port selected (working or protection) shall be conveyed in special SSM packets once every second, on all egress GE ports having link OAM operation enabled and SSM operation enabled. An SSM packet is a special OAMPDU having a 64 bytes length. The Destination address and Length/Type field must indicate 'slow protocol' operation, and the Flags field must be updated as for other OAMPDUs. The SSM shall be contained in the first Data field, and the remaining Data/Pad bytes shall be 0. Any SSM packets received shall be discarded by the ETEXLS.

Synchronisation of OMC2 network elements is illustrated in figure 9. The synchronisation is derived from one of the two uplink GE ports, and used to clock all PHYs. The SSM packets received on the uplink GE ports are used in the SEC processing. A resulting SSM packet is transmitted on the uplink ports.

The fixed GE port #1 on each Calla48-Lan is defined as the uplink ports, and are called uplink ports #1 (on Calla48-Lan #1) and #2 (on Calla48-Lan #2). The OMC2 must be able to derive the timing signal from the ingress uplink GE ports #1 or #2. The OMC2 must be able to receive SSM packets from the ingress uplink GE ports #1 and #2. The format of an SSM packet is as described for the ETEXLS, i.e. any SSM packets received shall be discarded by the OMC2. SSM packets received on other ports than the uplink GE ports shall be discarded by the OMC2.

The selection of the timing signal from either of the two uplink GE ports shall be based on their related quality levels conveyed in the SSMs received. The SSM has one of the following quality level values in accordance with EN 300 417-6-1, listed in descending order of quality: QL-PRC, QL-SSU-A, QL-SSU-B, QL-SEC and QL-DNU (Do Not Use for sync.). If no SSM is received on a port, a QL-DNU quality level shall be assumed for that particular port. The timing signal having the highest quality level shall be selected for further processing.

A (configurable) priority level shall be associated with each uplink GE port. In case both timing signals are having the same quality level the port having the timing signal with the highest priority shall be selected. Normally, the internal oscillator of the OMC2 shall be locked to the timing signal selected from one of the uplink GE ports. However, if neither of these ports exhibits timing signals with a quality level better than QL-DNU, the OMC2 shall instead use the free-running timing signal of its own internal oscillator, having a QL-SEC (G.813) quality level.

The timing signal from the OMC2 internal oscillator shall be used for timing the (egress signals on the) FE and GE PHYs.

The quality level of the selected timing signal shall be conveyed in special SSM packets once every second, on both GE uplink egress ports having link OAM operation enabled and SSM operation enabled. However, in order to help avoiding timing loops, an SSM indicating QL-DNU shall be transmitted on the same uplink GE port as the timing is being derived from.

Although a preferred embodiment of the present invention has been described and shown, the invention is not restricted to it, but may also be embodied in other ways within the scope of the subject-matter defined in the following claims.

## Claims

1. A method of transmitting TDM services through a packet network to TDM user equipment, said packet network comprising a number of packet switching network elements, wherein each packet switching network element transmits data to the network on a bearer link using a certain data rate,
**characterized in that** the method comprises the steps of:
• supplying a TDM synchronization signal to at least one of said packet switching network elements;
• synchronizing the transmission data rate of said at least one packet switching network element to said TDM synchronization signal;
• synchronizing the data rate of other packet switching network elements to the data rate of received data originating from said at least one packet switching network element; and
• generating at said TDM user equipment a TDM clock signal from the data rate of data received from one of said synchronized packet switching network elements.

2. A method according to claim 1, wherein said packet network is connected to a synchronous network, such as an SDH network, **characterized in that** the method further comprises the step of obtaining said TDM synchronization signal from a timing signal of the synchronous network.

3. A method according to claim 1 or 2, **characterized in that** said packet network is an Ethernet.

4. A method according to any one of claims 1 to 3, **characterized in that** the method further comprises the step of transmitting from each of said synchronized packet switching network elements a quality message indicative of a quality level of its data rate.

5. A method according to claim 4, **characterized in that** the method further comprises the step of synchronizing the data rate of a packet switching network element receiving data and quality messages from more than one other packet switching network element to the received data rate having the highest quality level.

6. A packet switching network element for receiving data packets from and transmitting data packets to a number of physical links of a packet network, wherein the packet switching network element is arranged to transmit data packets to the network on a bearer link using a certain data rate, said bearer link data rate being controlled by a clock signal (27) generated in the network element,
**characterized in that** the packet switching network element further comprises means (28) for synchronizing said clock signal to the bearer link data rate of data packets received from a selected one of the physical links connected to the network element.

7. A packet switching network element according to claim 6, **characterized in that** the element further comprises means for synchronizing said clock signal to a TDM synchronization signal supplied to the element.

8. A packet switching network element according to claim 7, wherein the element is connected to a synchronous network, **characterized in that** the element is arranged to obtain said TDM synchronization signal from a timing signal of the synchronous network.

9. A packet switching network element according to claim 8, **characterized in that** said synchronous network is an SDH network.

10. A packet switching network element according to any one of claims 6 to 9, **characterized in that** said packet network is an Ethernet.

11. A packet switching network element according to any one of claims 6 to 10, **characterized in that** the element is further arranged to transmit a quality message indicative of a quality level of its bearer link data rate.

12. A packet switching network element according to claim 11, **characterized in that** the element is further arranged to synchronize said clock signal, when data packets and quality messages are received from more than one physical link, to the bearer link data rate of the physical link having the highest quality level.
